# EUROPEAN PATENT APPLICATION

(11) **EP 2 604 833 A2**
(43) Date of publication of application: **19.06.2013**
(21) Application number: 12196679.0
(22) Date of filing: 12.12.2012
(51) Int. Cl.: F02D 41/30, F02D 19/06, F02D 41/00

(54) **System and method for controlling a variable ignition diesel-gasoline dual fuel powered combustion engine**

(30) Priority: 15.12.2011 KR 20110135575
(71) Applicant: HYUNDAI MOTOR COMPANY, Seoul (KR)
(72) Inventor: Jung, Hyunsung, 430-702 Anyang-si (KR); Choi, Dae, 445-723 Hwaseong-si (KR); Ki, Minyoung, 151-057 Seoul (KR); Park, Seungil, 445-130 Hwaseong-si (KR); Lee, Hyeungwoo, 441-720 Suwon-si (KR); Chi, Yohan, 445-130 Hwaseong-si (KR)
(74) Representative: Viering, Jentschura & Partner

(57) **Abstract**

A variable ignition diesel-gasoline dual fuel powered combustion engine can select spark ignition (SI) or compression ignition (DI) depending on the engine's operating range. The engine may include a cylinder block formed of at least one cylinder each being connected to an air intake manifold supplying air or a gasoline fuel-mixed air and an exhaust manifold exhausting an exhaust gas after combustions; and an ECU controlling the combustion modes. The ECU is configured to judge the engine's operating ranges of an engine depending on the speed and load of the engine, and when the range is the high load range, only the diesel fuel is combusted, and when the range is the low load range, only the gasoline fuel is combusted, and when the range is between the high load range and the low load range, the diesel and gasoline fuels are mixed and combusted.

## Description

### CROSS-REFERENCE TO RELATED APPLICATIONS

The present application claims priority of Korean Patent Application Number 10-2011-0135575 filed December 15, 2011, the entire contents of which application is incorporated herein for all purposes by this reference.

### BACKGROUND OF INVENTION

### Field of Invention

The present invention relates to a variable ignition type diesel-gasoline dual fuel powered combustion engine, a method for controlling of the same and a variable ignition type diesel-gasoline dual fuel powered combustion system, and in particular to a variable ignition type diesel-gasoline dual fuel powered combustion engine, a method for controlling of the same and a variable ignition type diesel-gasoline dual fuel powered combustion system which make it possible to select spark ignition or compression ignition depending on an engine's operating range.

### Description of Related Art

In a gasoline fuel engine, if a compression ratio is high, it is advantageous to combustion; however a knocking problem occurs.

It is needed to increase a compression ratio so as to meet an increasing strict exhaust gas regulation and high fuel efficiency, so a technology for inhibiting the above mentioned knocking problems is therefore needed.

If an exhaust gas recirculation (EGR) is adapted in an attempt to inhibit a knocking problem which occurs owing to the increase of a compression ratio, a knocking problem and a pumping loss could be prevented; however an ignition performance becomes bad due to a spark plug.

As a way to overcome the above mentioned problems, the combustion of a diesel-gasoline mixed fuel was introduced as an effective way. The diesel-gasoline fuel variable combustion is directed to igniting by injecting a diesel fuel which is used for the sake of an ignition control and is used as an ignition source, as compared to a conventional way that a diesel fuel and air are premixed and ignited using a spark plug during a compression stroke.

The above explained diesel-gasoline mixed fuel is advantages to the matters that a good ignition performance of a gasoline fuel can be obtained under a high EGR condition, and a fuel efficiency can be improved thanks to a combustion efficiency improving owing to a volume combustion as compared to a gasoline fuel engine, and the contaminants such as NOx and smoke can be prevented as compared to a diesel fuel engine, and a DPF is not needed thanks to the decrease of such contaminants, and it can be well adapted to a low cost injection system, so the unit cost can be significantly decreased as compared to a diesel fuel engine.

However, the above-explained diesel-gasoline fuel mixed combustion has problems to be solved; in other words, a compression ratio decreases in the low load range, and it is hard to obtain a designed ignition performance owing to a strict EGR condition, so a knocking problem occurs due to a high compression ratio in the high load range.

The information disclosed in this Background section is only for enhancement of understanding of the general background of the invention and should not be taken as an acknowledgement or any form of suggestion that this information forms the prior art already known to a person skilled in the art.

### SUMMARY OF INVENTION

Accordingly, the present invention is made to resolve the problems encountered in the conventional art. Various aspects of the present invention provide for a variable ignition type diesel-gasoline dual fuel powered combustion engine, a method for controlling of the same, and a variable ignition type diesel-gasoline dual fuel powered combustion system which are directed to improving a combustion type depending on a load so as to improve a cold and idle engine start stability in the course of a diesel-gasoline fuel mixed combustion in a diesel-gasoline dual fuel powered combustion engine while improving a combustion type depending on the loads so as to improve a full load performance.

Various aspects of the present invention provide for a variable ignition type diesel-gasoline dual fuel powered combustion engine, comprising a cylinder block formed of at least one cylinder, each cylinder being connected to an air intake manifold for receiving air or a gasoline-mixed air and an exhaust manifold discharging an exhaust gas after combustions; a spark plug provided at each cylinder; a diesel fuel injector provided at each cylinder; and an electronic control unit (ECU) controlling the engine in such a way that the engine's operating range is judged, and as a result of the judgment, when the range is in the high load range, the air is supplied into the interior of the cylinder, and a diesel fuel is injected by way of a diesel fuel injector and compressed and ignited, and in the low load range, a gasoline-mixed air is supplied into the interior of the cylinder and is ignited by the spark plug, thus generating spark ignition, and when the range is between the low load range and the high load range, a gasoline fuel-mixed air is supplied into the interior of the cylinder, and a diesel fuel is injected by way of the diesel fuel injector, and a diesel-gasoline fuel is compressed and ignited.

The ECU may be configured to judge the engine's operating ranges based on the speed and the load.

Various aspects of the present invention provide for a method for controlling a variable ignition type diesel-gasoline dual fuel powered combustion engine in which a spark plug and a diesel fuel injector are provided in the interior of a cylinder, and air or a gasoline-mixed air is introduced by way of an air intake manifold and is spark-ignited or compression-ignited in the interior of the cylinder, comprising a cold driving judgment step for judging whether or not an engine is warmed up by measuring the temperature of cooling water; an engine's operating range judgment step for judging the engine's operating range of an engine based on the speed and the load of the engine when it is judged that the engine is warmed up as a result of the judgment in the cold driving judgment step; and a combustion range application step for driving in the previously set combustion range of the engine depending on the engine's operating range determined in the engine's operating range judgment step.

When it is judged that the range is the high load range in the engine's operating range judgment step, a diesel fuel combustion step, in which a diesel fuel is injected into the interior of the cylinder and is compressed and ignited, may be performed.

In addition, when it is judged that the range is in the low load range in the engine's operating range judgment step, a gasoline fuel combustion step, in which only the gasoline-mixed air is supplied to the interior of the cylinder and is spark-ignited, may be performed.

When it is judged that the engine is not warmed up in the cold driving judgment step, the gasoline fuel combustion step may be performed.

In addition, when it is judged that the range is between the low load range and the high load range in the engine's operating range judgment step, a mixed fuel combustion may be performed, in which the diesel-gasoline fuels are mixed and combusted using the diesel fuel droplets ignited by a compression and ignition by supplying a gasoline-premixed air and injecting a diesel fuel.

In addition, after the combustion mode application step, an engine stop judgment step is performed for judging whether or not an engine is stopped, and when it is judged that the engine is not stopped in the engine stop judgment step, the cold driving judgment step may be performed.

Various aspects of the present invention provide for a variable ignition type diesel-gasoline dual fuel powered combustion system which is formed of at least one cylinder, each cylinder being equipped with a spark plug and a diesel fuel injector, and air or a gasoline-mixed air is introduced into each cylinder, and an electronic control unit (ECU) is configured to control gasoline fuel combustion, diesel fuel combustion or gasoline-diesel fuel combustion depending on the engine's operating range, comprising an ECU controlling, by judging the engine's operating ranges, an engine to operate with one selected among diesel fuel combustion, diesel-gasoline fuel combustion and gasoline fuel combustion depending on the engine's operating ranges.

The ECU controls the engine to operate in such a way that when the engine's operating range is in the high load range, air may be supplied into the interior of the cylinder and a diesel fuel is injected by way of a diesel injector and is compressed and ignited.

The ECU controls the engine to operate in such a way that when the engine's operating range is in the low load range, a gasoline-mixed air may be supplied into the interior of the cylinder and is spark-ignited by the spark plug.

The ECU controls the engine to operate in such a way that when the engine's operating range is between the low load range and the high load range, a gasoline-mixed air may be supplied into the interior of the cylinder, and a diesel fuel may be injected by way of the diesel injector, and a diesel-gasoline fuel may be compressed and ignited.

In the variable ignition type diesel-gasoline dual fuel powered combustion engine, a method for controlling of the same and a variable ignition type diesel-gasoline dual fuel powered combustion system according to the present invention, a cold engine start can be improved in such a way to ignite the engine using a spark plug in the low load range.

In the middle load range, the advantages of a diesel-gasoline fuel mixed combustion can be obtained with the aid of a diesel-gasoline fuel mixed combustion.

In the high load range, it is possible to obtain a high output as compared to a gasoline fuel engine of the same displacement volume in such a way to inject only the diesel fuel.

The combustion is performed under the optimum combustion conditions depending on the engine's operating ranges of the engine, so the engine start stability is improved, and the full load characteristics are improved, and the contaminants can be reduced.

The methods and apparatuses of the present invention have other features and advantages which will be apparent from or are set forth in more detail in the accompanying drawings, which are incorporated herein, and the following Detailed Description, which together serve to explain certain principles of the present invention.

### BRIEF DESCRIPTION OF THE DRAWINGS

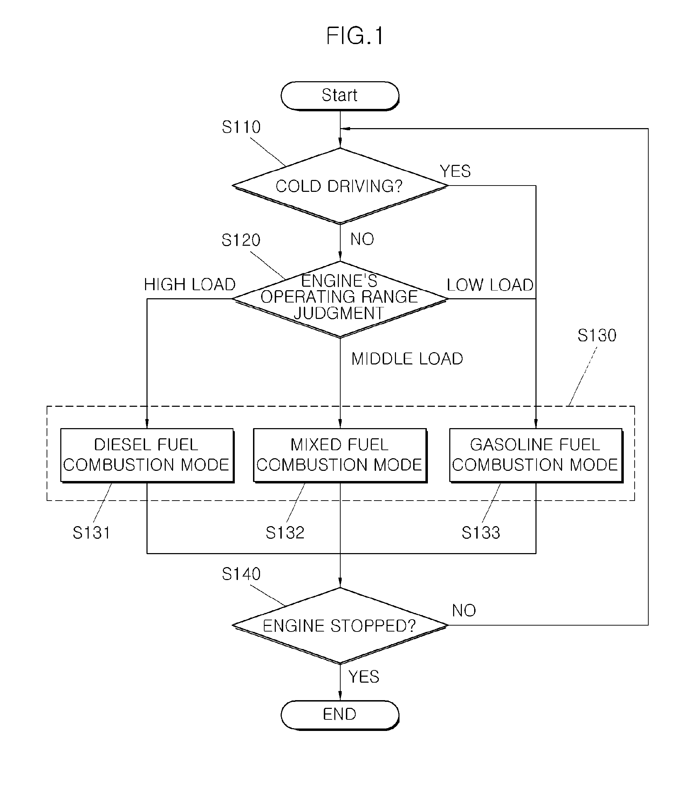

Figure 1 is a flow chart of a variable ignition type diesel-gasoline dual fuel powered combustion control method according to the present invention.

Figure 2 is a graph of the combustion mode by the combustion ranges depending on a variable ignition type diesel-gasoline dual fuel powered combustion engine control method according to the present invention.

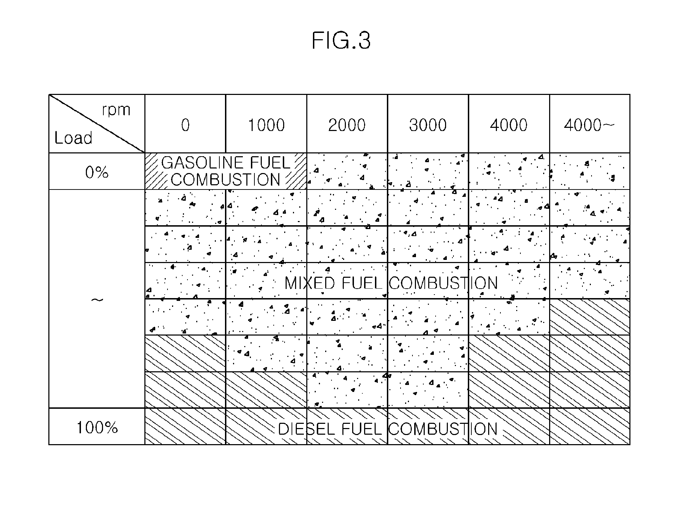

Figure 3 is a table of the combustion maps by the combustion ranges depending on a variable ignition type diesel-gasoline dual fuel powered combustion engine control method according to the present invention.

Figure 4A and 4B are a graph of the changes of spark ignition signal when changing a combustion mode between spark ignition combustion and a mixed combustion in a variable ignition type diesel-gasoline dual fuel powered combustion engine control method according to the present invention.

Figure 5A and 5B are a graph of the changes of the amount of air when changing a combustion mode between compression ignition combustion and a mixed combustion in a variable ignition type diesel-gasoline dual fuel powered combustion engine control method according to the present invention.

Figure 6 is a concept view illustrating a variable ignition type diesel-gasoline dual fuel powered combustion engine according to the present invention.

### DETAILED DESCRIPTION

Reference will now be made in detail to various embodiments of the present invention(s), examples of which are illustrated in the accompanying drawings and described below. While the invention(s) will be described in conjunction with exemplary embodiments, it will be understood that present description is not intended to limit the invention(s) to those exemplary embodiments. On the contrary, the invention(s) is/are intended to cover not only the exemplary embodiments, but also various alternatives, modifications, equivalents and other embodiments, which may be included within the spirit and scope of the invention as defined by the appended claims.

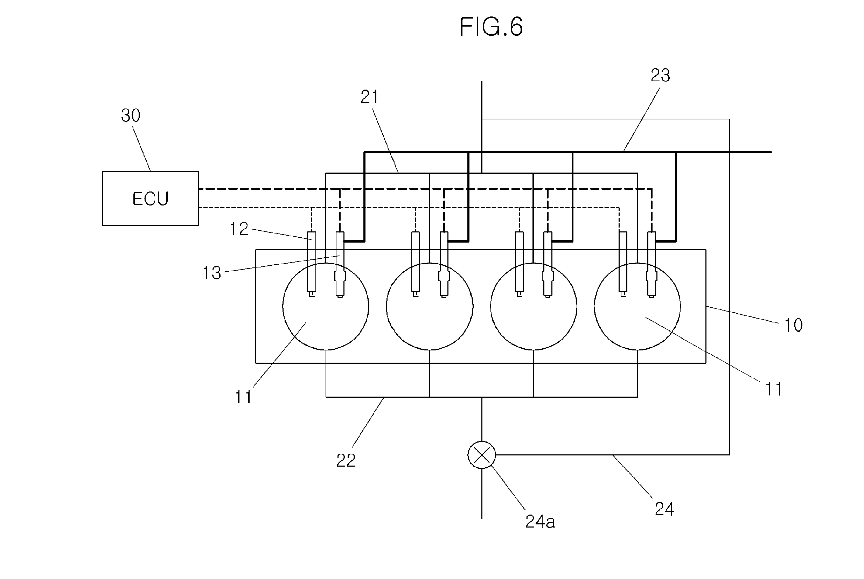

As shown in Figure 6, the variable ignition type diesel-gasoline dual fuel powered combustion engine according to the present invention comprises a cylinder block 10 formed of at least one cylinder 11, each cylinder 11 being connected to an air intake manifold 21 for receiving air or a gasoline-mixed air and an exhaust manifold discharging an exhaust gas after combustions; a spark plug 12 provided at each cylinder 11; a diesel fuel injector 13 provided at each cylinder 11; and an electronic control unit (ECU) 30 controlling the combustions. The ECU 30 is configured to judge the engine's operating ranges and to operate in such a way that the air is supplied into the interior of the cylinder 1 in the high load range, and the diesel fuel is injected by way of a diesel fuel injector 13, and a compression and ignition are performed. In the low load range, the gasoline fuel-mixed air is supplied into the interior of the cylinder 11, and the ignition is performed by a spark plug, and in the range between the low load range and the high load range, a gasoline fuel-mixed air is supplied into the interior of the cylinder 14, and the diesel fuel is injected by way of the diesel fuel injector 13, and the diesel-gasoline fuels are compressed and ignited.

The cylinder block 10 comprises at least one cylinder 11. Each cylinder 11 is connected to an air intake manifold 21 receiving air or a gasoline fuel-mixed air from the outside, and an exhaust manifold 22 discharging an exhaust gas after combustions. The variable ignition type diesel-gasoline dual fuel powered combustion engine according to the present invention is configured to use both the diesel fuel and the gasoline fuel. In case that only the diesel fuel is combusted, only the air is supplied by way of the air intake manifold 21, and in case that the gasoline fuel is combusted, the gasoline fuel-mixed air is supplied into the air intake manifold 21.

Each cylinder 11 of the cylinder block 10 is equipped with a spark plug 12 and a diesel fuel injector 13. The spark plug 12 is used as an ignition source for the sake of the combustion of only the gasoline fuel. The diesel fuel injector 13 is configured to inject a diesel fuel and to ignite it when a diesel fuel and a gasoline fuel are mixed and combusted or only the diesel fuel is combusted. The diesel fuel injector 13 is connected with a diesel fuel supply line 23, so the diesel fuel can be injected to each cylinder 11.

The exhaust manifold 22 and the air intake manifold 21 are connected to the EGR line 24 divided by way of an EGR value 24a at the exhaust manifold 22 so as to recirculate part of the exhaust gas into the interior of the cylinder 11.

The ECU 30 is configured to judge the driving condition of a vehicle and to determine what mode the engine operates in and to control each component depending on the determined driving mode. In other words, the ECU 30 judges the engine's operating range. In case of the high load range, only the diesel fuel is combusted by the engine for the purpose of generating the maximum output, and in the low load range, only the gasoline fuel is combusted by the engine while effectively coping with the exhaust gas regulation. In case that the range is neither the high load range nor the low load range, in other word, in case of the middle load range, the diesel fuel and the gasoline fuel are mixed and combusted.

The method for controlling a variable ignition type diesel-gasoline dual fuel powered combustion will be described.

The method for controlling a variable ignition type diesel-gasoline dual fuel powered combustion according to the present invention comprises a cold driving judgment step (S110) for judging whether an engine is warmed up by measuring a temperature of cooling water, an engine's operating range judgment step (S120) judging the engine's operating range based on the speed and load of the engine when it is judged that the engine has warmed up in the cold driving judgment step (S110), and a combustion mode application step (S130) for driving the engine based on a previously set engine combustion mode depending on the engine's operating range determined in the engine's operating range judgment step (S120).

The cold driving judgment step (S110) is directed to judging the warming up state of the engine using the temperature of cooling water. The warming up state of the engine is judged by measuring the temperature of the cooling water and by comparing with a previously set warming up temperature. The warming up state of the engine is judged for the purpose of driving the engine with a gasoline fuel having a good driving performance in the cold mode in the diesel-gasoline dual fuel powered combustion engine.

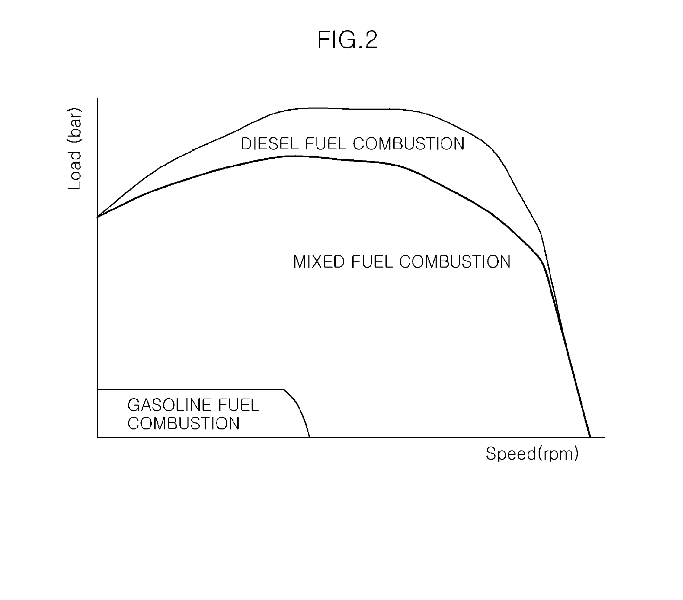

The engine's operating range judgment step (S120) is directed to judging what range the engine operates in by measuring the speed (rpm) and the load of the engine. For example, as shown in Figure 2, the engine's operating range can be judged using the map in which the load ranges are mapped by means of the speed and load of the engine. In other words, the range, in which the speed and load of the engine are low, is set as the low load range, and the range, in which the load is high irrespective of the speed of the engine, is set as the high load range.

The combustion mode application step (S130) is directed to controlling the combustion of the diesel-gasoline dual fuel powered combustion engine by means of the engine's operating range determined in the engine's operating range judgment step (S120).

The engine's operating range judgment step (S120) is directed to combusting by mixing diesel-gasoline fuels in accordance with a previously set method in the engine's operating range determined in the engine's operating range judgment step (S120) or by using only the diesel fuel or the gasoline fuel.

For example, in case that the engine's operating range of the vehicle is in the high load range, since the maximum output is needed, the diesel fuel combustion step (S131) is performed combusting the diesel fuel which has a good driving force performance as compared to the gasoline fuel. In the diesel fuel combustion step (S131), the gasoline-mixed air is not supplied into the interior of the cylinder (11), but only the air is supplied into the air intake manifold 21 and is compressed, and the diesel is injected, and the compression and ignition are performed, so the engine can output the maximum output.

In case that the engine's operating range of the vehicle is in the low load range, the gasoline fuel combustion step (S133) is performed for reducing the contaminants rather than to consider the driving force performance. In the gasoline fuel combustion step (S133), the gasoline-mixed air is supplied into the interior of each cylinder 11 and is spark-ignited using the spark plug 12 after it is compressed, so the contaminants such as smoke can be reduced. The low load range is also related to the engine start which does not need a lot of driving force, so the gasoline having a good cold engine start performance as compared to the diesel fuel is combusted, whereby the engine start can be enhanced even in the cold engine start.

In case that the engine's operating range judged by the load and the speed of the engine is between the low load range and the high load range, in other word, it is in the middle load range, the diesel fuel and the gasoline fuel are mixed and combusted, so the diesel-gasoline fuel mixed combustion step (S132) is performed, while making sure that the advantages of both the diesel fuel combustion and the gasoline fuel combustion can be obtained. In the diesel-gasoline fuel mixed combustion step (S132) features in that the gasoline fuel-premixed air is supplied into the interior of the cylinder 11 and is compressed, and the diesel is injected by way of the diesel fuel injector 13, and the diesel fuel droplets injected into the interior of the cylinder 11 is ignited and operates as an ignition source, so the driving force is generated by the diesel-gasoline fuel combustion. In the diesel-gasoline fuel mixed combustion step (S132), since the diesel fuel droplets operate as an ignition source, the volume combustion is possible, and the fuel efficiency as compared to only the gasoline fuel combustion can be enhanced.

It is judged whether the engine has been stopped after the diesel fuel combustion step (S131), the diesel-gasoline fuel combustion step (S132) or the gasoline fuel combustion step (S133). If the engine is not stopped, the engine's operating range judgment step (S120) is performed, and it is judged whether the engine's operating range is changed. If the engine's operating range is changed, the combustion mode should be controlled to match with the changed engine's operating range.

According to the method for controlling a variable ignition type diesel-gasoline dual fuel powered combustion engine of the present invention, since the engine performs combustions in the order of the gasoline fuel combustion - the mixed fuel combustion - the diesel fuel combustion depending on the increase and decrease of the load, so a certain range in which the combustion mode changes is formed between the gasoline fuel combustion - the mixed fuel combustion, and the mixed fuel combustion - the diesel fuel combustion.

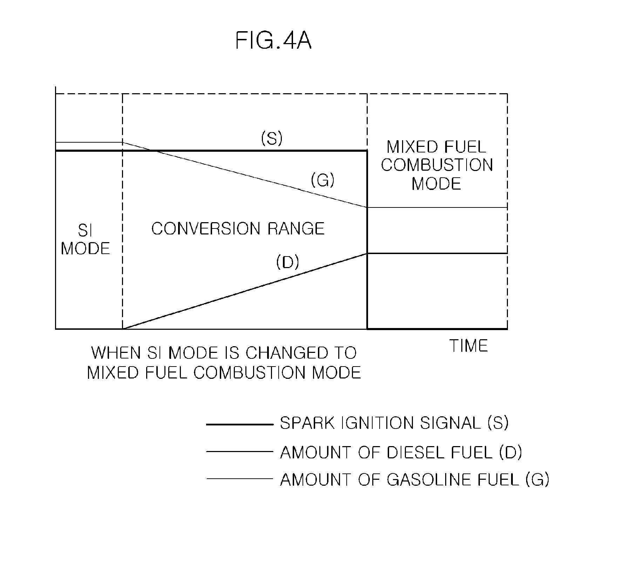

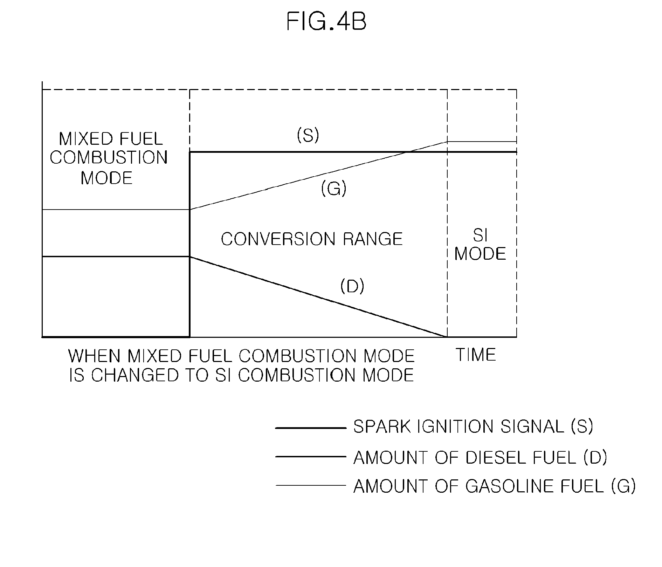

For example, Figure 4A and 4B show the spark ignition signal at the time of a mode change between the gasoline fuel combustion and the mixed fuel combustion, and the amounts of the diesel and gasoline fuels. In case that the low load range is changed to the middle load range, as shown in Figure 4A, the amount of the diesel fuel starts increasing from the moment the change starts, and the amount of the gasoline fuel decreases. When the mode enters the mixed fuel combustion mode, the diesel fuel and the gasoline fuel are injected at proper ratios, and the spark ignition signal is stopped. In case that the engine's operating range changes from the middle load range to the low load range, as shown in Figure 4B, when the combustion mode starts changing, the amount of the gasoline fuel increases, but the amount of the diesel fuel decreases. The spark ignition signal generates at the moment the change starts.

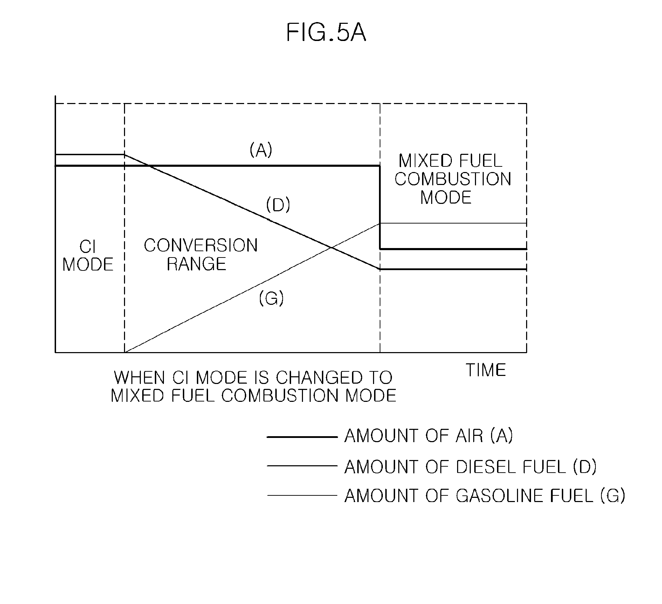

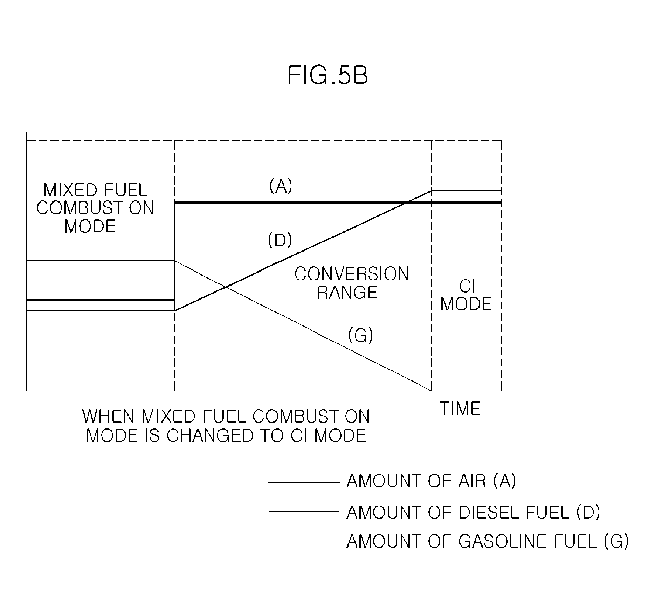

Figure 5 shows the amounts of diesel and gasoline fuels and the changes of the amounts of air suctions when changing the modes between the mixed fuel combustion and the diesel fuel combustion. When the combustion mode changes from the high load range of the diesel fuel combustion mode to the middle load range, the amount of the diesel fuel injection starts decreasing, and the amount of the injection of the gasoline fuel increases, and the amount of the suction of the air maintains maximum until the routine changes to the mixed fuel combustion step (S132), and when the change of the combustion mode is completed, the amount of the mixed air needed for the sake of the ignition of the diesel fuel decreases at a set ratio. When the mode changes from the mixed fuel combustion mode to the diesel fuel mode, as the conversion of the combustion mode starts, the amount of the gasoline fuel decreases, and the amount of the diesel fuel increases. As the conversion is completed, the amount of the air supplied into the interior of each cylinder 11 becomes maximum.

The variable ignition type diesel-gasoline mixed combustion system according to the present invention comprises at least one cylinder. Each cylinder comprises a spark plug and a diesel injector. In the variable ignition type diesel-gasoline dual fuel powered combustion system which features in that air or gasoline fuel-mixed air is introduced into each cylinder, and the ECU controls the gasoline fuel, the diesel fuel or the gasoline-diesel fuel combustions depending on the engine's operating range, the ECU 30 judges the engine's operating range. In case of the high load range, the diesel fuel is combusted, and in the low load range, the gasoline fuel is combusted, and in the range between the low load range and the high load range, the diesel-gasoline fuel mixed combustion is performed.

In other words, the ECU 30 controls measuring the speed and the load of the engine and judges what range the engine operates in, and selecting a proper combustion mode depending on each engine's operating range.

For example, since the maximum output is needed in the high load range, it is controlled that only the air is supplied into the interior of the cylinder 11 so that only the diesel fuel having a higher output than the gasoline fuel can be combusted, and the diesel fuel is injected by way of the diesel fuel injector 13 and is compressed, so only the diesel fuel is combusted.

In the low load range, since decreasing the contaminants are first things to handle, the gasoline fuel-mixed air is supplied for only the gasoline fuel to be combusted, and it is spark-ignited, so only the gasoline fuel is combusted.

The foregoing descriptions of specific exemplary embodiments of the present invention have been presented for purposes of illustration and description. They are not intended to be exhaustive or to limit the invention to the precise forms disclosed, and obviously many modifications and variations are possible in light of the above teachings. The exemplary embodiments were chosen and described in order to explain certain principles of the invention and their practical application, to thereby enable others skilled in the art to make and utilize various exemplary embodiments of the present invention, as well as various alternatives and modifications thereof. It is intended that the scope of the invention be defined by the Claims appended hereto and their equivalents.

## Claims

1. A variable-ignition diesel-gasoline dual fuel powered combustion engine, comprising:
a cylinder block having at least one cylinder, each cylinder being connected to an air intake manifold for receiving air or a gasoline-mixed air and an exhaust manifold discharging an exhaust gas after combustion;
a spark plug provided for each cylinder;
a diesel fuel injector provided for each cylinder; and
an electronic control unit (ECU) controlling the engine in such a way that an engine operating range is judged, and as a result of the judgment, when the range is in the high load range, the air is supplied into the interior of the cylinder, and a diesel fuel is injected by way of a diesel fuel injector and compressed and ignited, and in the low load range, a gasoline-mixed air is supplied into the interior of the cylinder and is ignited by the spark plug, thus generating spark ignition, and when the range is between the low load range and the high load range, a gasoline fuel-mixed air is supplied into the interior of the cylinder, and a diesel fuel is injected by way of the diesel fuel injector, and a diesel-gasoline fuel is compressed and ignited.

2. The engine according to claim 1, wherein the ECU is configured to judge the engine operating range based on the speed and the load.

3. A method for controlling a variable-ignition diesel-gasoline dual fuel powered combustion engine in which a spark plug and a diesel fuel injector are provided for a cylinder, and air or a gasoline-mixed air is introduced by way of an air intake manifold and is spark-ignited or compression-ignited in an interior of the cylinder, comprising:
a cold driving judgment step for judging whether or not an engine is warmed up by measuring the temperature of cooling water;
an engine operating range judgment step for judging an engine operating range of an engine based on the speed and the load of the engine when it is judged that the engine is warmed up as a result of the judgment in the cold driving judgment step; and
a combustion mode application step for driving in the previously set combustion mode of the engine depending on the engine operating range determined in the engine operating range judgment step.

4. The method according to claim 3, wherein when it is judged that the range is the high load range in the engine operating range judgment step, a diesel fuel combustion step, in which a diesel fuel is injected into the interior of the cylinder and is compressed and ignited, is performed.

5. The method according to claim 3, wherein when it is judged that the range is in the low load range in the engine operating range judgment step, a gasoline fuel combustion step, in which only the gasoline-mixed air is supplied to the interior of the cylinder and is spark-ignited, is performed.

6. The method according to claim 5, wherein when it is judged that the engine is not warmed up in the cold driving judgment step, the gasoline fuel combustion step is performed.

7. The method according to claim 3, wherein when it is judged that the range is between the low load range and the high load range in the engine operating range judgment step, a mixed fuel combustion is performed, in which the diesel-gasoline fuels are mixed and combusted using the diesel fuel droplets ignited by a compression and ignition by supplying a gasoline-premixed air and injecting a diesel fuel.

8. The method according to claim 3, wherein after the combustion mode application step, an engine stop judgment step is performed for judging whether or not an engine is stopped, and when it is judged that the engine is not stopped in the engine stop judgment step, the cold driving judgment step is performed.

9. A variable-ignition diesel-gasoline dual fuel powered combustion system comprising:
at least one cylinder, each cylinder being equipped with a spark plug and a diesel fuel injector, and each receiving air or a gasoline-mixed air therein;
an electronic control unit (ECU) controlling gasoline fuel combustion, diesel fuel combustion or gasoline-diesel fuel combustion depending on an engine operating range; and
an ECU controlling, by judging the engine operating range, an engine to operate with one selected among diesel fuel combustion, diesel-gasoline fuel combustion and gasoline fuel combustion depending on the engine operating range.

10. The system according to claim 9, wherein the ECU controls the engine to operate in such a way that when the engine operating range is in the high load range, air is supplied into the interior of the cylinder and a diesel fuel is injected by way of a diesel injector and is compressed and ignited.

11. The system according to claim 9, wherein the ECU controls the engine to operate in such a way that when the engine operating range is in the low load range, a gasoline-mixed air is supplied into the interior of the cylinder and is spark-ignited by the spark plug.

12. The system according to claim 9, wherein the ECU controls the engine to operate in such a way that when the engine operating range is between the low load range and the high load range, a gasoline-mixed air is supplied into the interior of the cylinder, and a diesel fuel is injected by way of the diesel injector, and a diesel-gasoline fuel is compressed and ignited.
